# EUROPEAN PATENT SPECIFICATION

(11) **EP 4 509 740 B1**
(45) Date of publication and mention of the grant of the patent: **05.08.2026**
(21) Application number: 24382135.2
(22) Date of filing: 12.02.2024
(51) Int. Cl.: F16H 57/039, F16H 1/16, H02K 7/116, H02K 11/215, H02K 11/33, F16H 59/02, F16H 61/00, F16H 61/28

(54) **A MECHANICAL TRANSMISSION ACTUATOR FOR A VEHICLE AND RELATED METHODS**
MECHANISCHER GETRIEBESTELLANTRIEB FÜR EIN FAHRZEUG UND ZUGEHÖRIGE VERFAHREN
ACTIONNEUR DE TRANSMISSION MÉCANIQUE POUR UN VÉHICULE ET PROCÉDÉS ASSOCIÉS

(30) Priority: 14.08.2023 EP 23382850
(43) Date of publication of application: 19.02.2025
(73) Proprietor: Fico Triad, S.A., 08028 Barcelona (ES)
(72) Inventor: Jou Prat, Ramon, 08028 Barcelona (ES)
(74) Representative: Bardehle Pagenberg S.L.

(56) References cited:
- EP-A1- 0 617 213
- JP-B2- 6 545 169
- US-A1- 2019 024 790
- US-A1- 2022 325 793
- US-B2- 11 085 507
- US-B2- 7 464 620

## Description

The present invention relates to a mechanical transmission actuator for a vehicle. Said mechanical transmission actuator may be a gearbox actuator for vehicle transmissions. The present invention further relates to a method of assembling a mechanical transmission actuator.

### BACKGROUND

A gearbox is a type of vehicle transmission configured to transfer the power produced by an engine to the drive wheels of the vehicle. A gearbox enables adjusting the gear ratio between the wheels and the engine as the vehicle slows down or speeds up. A driver of a vehicle can use a shifter device to change gears i.e. change the gear ratio between an input gear connected to the engine side and an output gear connected to the wheels side.

A gearbox actuator is known in the art for remotely actuating a gearbox in a motor vehicle automatic transmission such as of the shift-by-wire type. In shift-by-wire type vehicle transmissions, a shift signal from a user of a vehicle is translated into a rotation of a transmission shift shaft for changing a transmission mode. Known transmission modes in a vehicle automatic transmission are, for example, park mode, no park mode, reverse mode, neutral mode, and drive mode. Any other transmission mode is of course possible.

Document US 2019/024790 A1 discloses a mechanical transmission actuator for a vehicle. Gearbox actuators of the prior art fail to accurately determine the position of a part of the gearbox actuator such as a gearbox shaft (referred to as external shaft or output shaft in the present disclosure).

Also, known vehicle gearbox actuators are complicated and not compact. Particularly, they tend to be large which may be a problem for fitting them in motor vehicles.

Further, one of the difficulties encountered in such actuators is that not all of the transmission modes require the same physical parameters. For example, some transmission modes require higher amounts of torque than others. Such prior art actuators still require large diameter rotating parts for the purpose of providing the required torque for changing between different transmission modes or transmission stages. Known vehicle gearbox actuators do not solve the problem of standardization.

Most gearbox actuators of the prior art use a DC (direct current) electric motor for actuating the vehicle automatic transmission gearbox via a gear train. DC electric motors may be provided with two electric cables for supplying electric current thereto. No control data or sensing signal may be generated or received by said DC electric motors in relation to the relative position between the stator and the rotor. Indeed, no internal control or sensing parameters are generated by DC electric motors, but gearbox actuators simply control the position of the output shaft by comparing the current position thereof with a predetermined position. Furthermore, said DC electric motors or brushed motors comprise fixed brushes which are mounted to the stator. To drive a brushed motor, DC voltage is applied across the brushes, which passes current through the rotor windings to make the motor spin. In operation, brushes my wear out with use, causing a reduction in the lifespan of the electric motor.

The type of electric motor employed may impact the manufacturing cost of the gearbox actuator. As the electric motor is configured to generate torque that is transferred to the output shaft, the electric motor is to be designed according to the specific torque to be transferred to the gearbox connected to the gearbox actuator. DC motors usually produce small torque in relation to their size in comparison to other types of electric motors. As a consequence, gearbox actuators provided with an electric motor with low torque may comprise a higher number of reduction stages than gearbox actuators provided with an electric motor with higher torque. An increase of the number of reduction stages, i.e. gear assemblies, disadvantageously increases the overall size of the gearbox actuator.

Furthermore, an increase of the number of reduction stages, i.e. gear assemblies, causes an increase of torque at the output shaft in the non-operation mode. A problem with DC motors is that, when they are in the non-operation mode, the torque at the output shaft may be higher than the torque of the gearbox. This disadvantageously causes the actuator to negatively influence the gearbox.

There is thus a need for a gearbox actuator capable of providing suitable torque values for changing between transmission modes while the actuator overall dimensions are reduced, the detection of a part of the actuator is improved, and the production cost of the actuator is reduced.

### SUMMARY

It is an object of an aspect of the present invention to provide a mechanical transmission actuator for a vehicle that comprises:
- a motor body configured to produce a generated torque using electric current applied thereto;
- a motor shaft moved by the generated torque, wherein the motor shaft defines a motor axis of rotation;
- a first gear assembly connected to the motor shaft, wherein the first gear assembly defines a first axis of rotation; and
- a selector gear assembly connected to the first gear assembly, wherein the selector gear defines a selector axis of rotation.

The motor axis of rotation is arranged substantially perpendicular to the first axis of rotation and the selector axis of rotation. Thus, the first axis of rotation and the selector axis of rotation may be arranged parallel to each other. In this way, the present mechanical transmission actuator overall dimensions are advantageously reduced. Specially, a dimension reduction is achieved in a direction along the selector gear assembly.

The motor body is a brushless direct current motor also known as BLDC motor or brushless motor. The BLDC motor body is a one single-unit. According to the invention, the BLDC motor body comprises a rotor, a stator, and a motor housing such that the motor housing encloses at least the rotor and the stator. This is, the motor housing defines a motor interior space therein to receive both the rotor and the stator. It helps to be moved as required during assembling of the present actuator. Thus, complexity of the assembly process of the mechanical transmission actuator is advantageously reduced. Unlike other state-of-the-art actuators, the motor body of the present invention is not integrated into the first gear assembly or the selector gear assembly. In particular, it is not arranged at least partially surrounding around the first gear assembly or the selector gear assembly. Further, it allows to use the same (type) of BLDC motor body with different designs of the mechanical transmission actuator. This is, the exterior shape and size of the present actuator may change from vehicle to vehicle. Different vehicle designs may therefore lead to different actuator designs in exterior shape and size, but also different speed and torque requirements on the selector gear assembly connected to an output shaft. The same BLDC motor body of the present invention may be employed even when the exterior shape and size of the actuator, and also the speed and torque requirements are different. For this purpose, at least most of the elements and components of the present actuator may be the same or remain substantially unchanged. It may be needed to merely increase or reduce the gear ratio, (i.e. increasing or reducing the number of teeth of the first gear assembly and/or the selector gear assembly). In short, the change of shape, size, speed or torque requirements from one mechanical transmission actuator design to another actuator design does not necessarily involve modification of the BLDC motor body. Instead, the same BLDC motor body may be used with different actuator designs.

The BLDC motor body may be an electrical triphasic motor, i.e. a three-phase motor. The rotor includes a permanent-magnet rotor and the stator includes a coil, preferably, three or more coils or inductors. More preferably, the stator includes a plurality of coils or inductors being multiple of three, i.e. three, six, nine, and the like. The rotor moves, e.g. rotates, relative to the stator. To do so, electric current of the stator may be switched. Since the stator does not rotate, brushes and commutators are not necessary.

The BLDC motor body has the advantage of being smaller in size and lighter than other types of electric motors such as DC motors. Also, it provides a good speed versus torque characteristics and higher speed range allowing to reduce the number of reduction stages with the aim of having the desired speed and torque at the output, e.g. output shaft. Therefore, instead of having a reduction mode including three or more gear assemblies connected to each other, the present invention may advantageously be provided with the first gear assembly and the selector gear assembly only. It contributes to ensuring that the gearbox actuator may be provided with a reduced number of reduction stages which advantageously allows the overall size of the gearbox actuator to be reduced. Additional gear assemblies are of course not ruled out. Furthermore, the BLDC motor body is efficient and reliable for the application of the present mechanical transmission actuator at least within the field of motor vehicles.

The mechanical transmission actuator may further comprise a motor support bracket. The motor support bracket may be adapted for supporting the BLDC motor body, in particular, the motor housing. In this way, the rotor and stator may be mounted on the present transmission actuator in a quick and easy manner. It may be preferred that the motor support bracket may be an integral part of or attached to at least one of a first housing part, a second housing part, and an intermediate support part that will be explained below. Advantageously, the rotor and stator may be positioned and fixed as required without directly contacting either an electronics carrier that will be explained below or the first and second housing parts or the intermediate support part or any structural part apart from the motor housing. Different amounts of torque may be required for different mechanical transmission actuators. This is, a required output torque of a first mechanical transmission actuator may be different in value than a required output torque of a second mechanical transmission actuator. As stated above, it is a purpose of the present invention to reduce the production cost of mechanical transmission actuators, especially when different output torques are required for different mechanical transmission actuators. The motor support bracket in connection with the motor housing allows to reduce the manufacturing and assembling cost of the present mechanical transmission actuator since the same BLDC motor body and motor support bracket may be employed with different actuator designs. More preferably, the BLDC motor body may be fixed by sandwiching o clipping by the motor support bracket and an actuator housing, either the first housing part or the second housing part.

The mechanical transmission actuator may further comprise the actuator housing defining an interior space for enclosing the BLDC motor body, the motor shaft, the first gear assembly, and the selector gear assembly. The actuator housing may thus comprise the first housing part and the second housing part adapted for being attached to each other so as to form the interior space for enclosing the BLDC motor body, the motor shaft, the first gear assembly, and the selector gear assembly. Further, the first and second housing parts may preferably enclose the electronics carrier and, optionally, the intermediate support part when provided.

The mechanical transmission actuator may be further provided with the above-mentioned electronics carrier arranged on a plane XY. Further, the first axis of rotation and the selector axis of rotation may be arranged substantially perpendicular to the plane XY. This is, the electronics carrier may be arranged substantially perpendicular to the first axis of rotation and the selector axis of rotation. The motor axis of rotation may be arranged substantially parallel to the plane XY. The electronics carrier may comprise a (rigid, i.e. non-flexible) printed circuit board. Furthermore, the electronics carrier may comprise a substrate, wherein electronic components are coupled to.

The mechanical transmission actuator further comprises a motor control unit. The motor control unit is an electronic control unit that may be configured to generate a control instruction. The control instruction may be used for controlling the produced generated torque. In this way, the position of the rotor and the stator to each other may be properly controlled. This is, the motor control unit may be configured to control the status of the motor body, e.g. the status of the rotor. In any case, the motor control unit may be configured at least to generate the control instruction to end up moving the motor shaft, i.e. rotating the rotor, end thereby controlling the status of the motor body, e.g. the status of the rotor. Preferably, the status of the rotor comprises a position of the rotor relative to the stator, or a parameter derived thereof such as speed, or acceleration. The control instruction may be for the BLDC motor body to be controlled as required. It is possible that said control instruction is sent to a motor driver that will be explained further below, and said electrical power driver is configured to generate and send electric power to the BLDC motor body so as to produce the generated torque and causing the rotation of the motor shaft. In short, the motor control unit may be configured to control the position of the rotor relative to the stator.

The motor control unit may be configured to receive a sensing signal indicative of the status, e.g. (rotational) position, of the rotor. As explained below, the sensing signal may be generated by a motor sensing means. The sensing signal may be generated based on
- a detection of (rotational) position or speed of the rotor relative to the stator, or
- a detection of position or speed of the motor shaft, or
- a measurement of an electrical parameter of the motor body such as power consumption. It is envisaged that the sensing signal may be or comprise said measurement of the electrical parameter.

It is thus preferred that the mechanical transmission actuator further comprises the motor sensing means. The motor sensing means is configured to sense or detect the status of the motor body, e.g. the status of the rotor. In use, the motor sensing means may be configured to sense the (rotational) position of the rotor relative to the stator. Further, the motor sensing means may be configured at least to generate a sensing signal to be received by the motor control unit. In this way, the motor control unit may control the BLDC motor body as required. This is, the control instruction, generated by the motor control unit, may be based on the sensing signal generated by the motor sensing means or any data derived therefrom. In short, the motor sensing means may generate the sensing signal indicative of the relative position between the rotor and the stator and subsequently the motor control unit may receive the sensing signal for generating the control instruction for controlling, e.g. moving, the rotor. In fact, the motor control unit may be configured to receive the sensing signal (and a selector signal described further below) for generating the control instruction for the motor driver to produce an electrical power signal for the BLDC motor body to be operated as required. Thus, the motor control unit may be configured to control the activation and deactivation of the different inductances, i.e. coils, of the stator so as to control the rotation of the rotor that is in connection with the motor shaft. As a consequence, the motor shaft rotates around the motor axis of rotation as required.

The motor sensing means may be arranged inside the BLDC motor body or outside the BLDC motor body. If inside, the BLDC motor body further comprises the motor sensing means. This is, the motor sensing means may be arranged in the motor interior space. In other words, the motor housing may further enclose the motor sensing means.

If the motor sensing means is arranged outside the BLDC motor body, it may be connected to the motor shaft. In this way, the motor sensing means may be configured to sense or detect the position or the rotational speed of the motor shaft. Again, the motor sensing means is configured at least to generate the sensing signal to be received by the motor control unit. In this way, the motor control unit may control the BLDC motor body as required.

In short, the motor sensing means is configured to directly sense or detect position or speed of the rotor relative to the stator or indirectly such as sensing or detecting position or speed of a component associated or connected to the motor body such as the motor shaft.

Additionally or alternatively, as explained, the motor control unit may preferably receive the sensing signal, generated by the motor sensing means, based on the measurement of power consumption of the BLDC motor body. This is known as back electromotive force (EMF). This acts like a generator creating electromotive resistance within the motor body. The motor sensing means may measure the back-EMF generated. As the back-EMF frequency is proportional to the motor speed this enables to determine the exact speed of the motor body. This is, the motor sensing means may be configured to measure this force and use it to determine the actual (rotational) speed of the motor body. The motor control unit may thus control this speed using back EMF as a reference to measure and adjust the speed. Therefore, the motor control unit may determine the evolution consumption or variation of electric current and/or voltage of the BLDC motor body. In this way, the motor control unit may generate the control instruction for moving the rotor. As a consequence, the motor shaft rotates around the motor axis of rotation as required.

In short, as stated above, the motor sensing means may be arranged inside or outside of the BLDC motor body. Additionally or alternatively, said motor sensing means may be configured to measure or detect the power consumption or an electric parameter such as electric current and/or voltage of the motor body. Said measurement or detection may occur inside or outside the motor housing.

The BLDC motor body may further comprise a hole provided in the motor housing. The hole is a through aperture for providing a passageway in order to communicate the motor interior space to the motor control unit and/or the electrical power driver as explained below.

The BLDC motor body may further comprise at least a portion of a connecting system. In fact, the above-mentioned hole provided in the motor housing may be adapted for receiving through (at least a portion of) the connecting system. The connecting system may be adapted for connecting the motor sensing means and the motor control unit to each other and/or connecting the BLDC motor body and the motor driver to each other.

In turn, the connecting system may include a sensing signal connecting system and/or an electrical power connecting system. The sensing signal connecting system may be configured to connect the motor sensing means to the motor control unit. Further, the electrical power connecting system may be configured to connect the BLDC motor body to the electrical power motor driver. The motor control unit may be further connected to the motor driver such that, in use, it may receive the sensing signal, process the information and generate the control instruction to the motor driver. In particular, the motor driver may cause the BLDC motor body to move in accordance with the given control instruction. It listens to the low voltage from the motor control unit and controls the BLDC motor body that needs high input voltage. In simple terms, the motor driver controls the direction of the BLDC motor body based on commands or instructions, i.e. the control instruction, received from the motor control unit.

Further, the mechanical transmission actuator may comprise a sensing connection means and/or an electrical power connection means.

The sensing signal connecting system may preferably be configured to connect the motor sensing means to the sensing connection means that, in turn, is connected to the motor control unit. Additionally, or alternative, the electrical power connecting system may be configured to electrically connect the stator of the BLDC motor body to the electrical power connection means that, in turn, is connected to the motor driver.

It is preferred that the connecting system may comprise a wiring or one or more pins. Preferably, the sensing signal connecting system may comprise a sensing wiring or one or more sensing pins. More preferably, the sensing wiring may comprise, in turn, a plurality of sensing wires configured to at least transmit the sensing signal. Or, analogously, the one or more sensing pins may be configured to at least transmit the sensing signal. It is even more preferred that the sensing wiring may comprise five sensing wires, e.g. three for sensing purposes and two for providing electric current to the motor sensing means. In any case, the sensing connection means may be adapted for receiving the sensing signal connecting system, in particular, the sensing wiring or the one or more sensing pins. Within the meaning of the present disclosure, the one or more sensing pins may be part of or attached to the control connection means. It is therefore possible that the sensing connection means comprises the one or more sensing pins arranged at least partially through the above-mentioned hole.

The sensing connection means may be:
(i) a sensing connector device for receiving and connecting the sensing wires or the sensing pins;
(ii) a sensing connector device comprising sensing pins;
(iii) a fixation means such as welding means for fixing the pins to the electronics carrier. It helps to properly attached the sensing pins, for example, without an intermediate element.

Preferably, the electrical power connecting system may comprise an electrical power wiring or one or more electrical power pins. The electrical power wiring may comprise, in turn, three wires or electric cables, for example, one for each phase. Analogously, the one or more electrical power pins may comprise three electrical power pins, for example, one for each phase. In any case, the electrical power connection means may be adapted for receiving the electrical power connecting system, in particular, the electrical power wiring or the one or more electrical power pins. Within the meaning of the present disclosure, the one or more electrical power pins may be part of or attached to the electrical power connection means. It is therefore possible that the electrical power connection means comprises the one or more electrical power pins arranged at least partially through the above-mentioned hole.

The electrical power connection means may be:
(i) an electrical power connector device for receiving and connecting the electrical power wires or the electrical power pins;
(ii) an electrical power connector device comprising electrical power pins; or
(iii) a fixation means such as welding means for fixing the pins to the electronics carrier.

According to the invention, the mechanical transmission actuator comprises two modes: an operation mode and a non-operation mode. In the operation mode, the motor shaft moves, e.g. rotates, in two opposite directions and a sub-assembly formed (at least) by the motor shaft, first gear assembly and the selector gear assembly has a torque higher than an operational predefined value. The operational predefined value is 1 Nm, preferably, 5 Nm. More preferably, said formed sub-assembly may have a torque of between 10-20 Nm. In the non-operation mode, the motor shaft is suitable for being moved, e.g. rotates, in two opposite directions, and said sub-assembly has a torque equal or lower than a non-operational predefined value. The non-operational predefined value is 1 Nm. In any case, the motor shaft is reversible, e.g. rotate in two opposite directions. As explained in the background section, the increase of the number of reduction stages, i.e. gear assemblies, causes the increase of torque at the output shaft in the non-operation mode. The advantage of employing the BLDC motor body is that, when the present mechanical transmission actuator is in the non-operation mode, the torque at the output shaft (connected to the selector gear assembly and the gearbox) may be lower than the torque of the gearbox, i.e. the non-operational predefined value. If the formed sub-assembly has a low torque, e.g. lower than the non-operational predefined value, it advantageously prevents the present mechanical transmission actuator to negatively influence the gearbox.

The BLDC motor body may have a front surface, a rear surface and a lateral surface. The rear surface may be arranged parallel and opposed to the front surface. The front surface may be associated to the motor shaft. The lateral surface joins the front and rear surface and is, for example, curved. The lateral surface may comprise a first and second lateral surfaces opposed to each other. Preferably, the BLDC motor body may have a general shape of a cylinder. The centre of the BLDC motor body may be defined as the mid-point between the front and rear surface, and the mid-point between opposite portions of the lateral surface. A portion of the BLDC motor body closest to the first housing part in a direction perpendicular to the electronics carrier from said center is referred herein as the highest portion of the BLDC motor body. A portion of the BLDC motor body arranged furthest away from the highest portion in the direction perpendicular to the electronics carrier from said center is referred herein as the lowest portion of the BLDC motor body.

It is preferred that the electronics carrier comprises an indentation adapted for arranging the BLDC motor body therein. It helps to reduce the overall dimension of the mechanical transmission actuator. In particular, it is achieved a reduction of the dimension perpendicular to the plane XY.

Preferably, the electronics carrier may surround at least two surfaces of the BLDC motor body. More preferably, the electronics carrier may surround a portion of the front surface and a portion of the lateral surface, e.g. the first or the second lateral surfaces. This is, the electronics carrier may include at least a L-shape. Further, it may be still possible that the electronics carrier may surround a portion of the front surface, a portion of the lateral surface (e.g. the first or the second lateral surfaces), and a portion of the rear surface. This is, the electronics carrier may include a general U-shape. It should be noted that the L-shape of the electronics carrier includes the U-shape. In any case, the electronics carrier may comprise the above-mentioned indentation to receive the BLDC motor body therein such that said BLDC motor body is at least partially surrounded by the electronics carrier.

The above-mentioned plane XY defined by electronics carrier may be arranged therebetween the highest portion and the lowest portion of the BLDC motor body. For example, a portion of the BLDC motor body may be arranged closer to the first housing part than the plane XY, whereas a portion of the BLDC motor body may be arranged further away from the first housing part than the plane XY. Preferably, the plane XY may be arranged therebetween the motor shaft and the highest portion of the BLDC motor body.

The electronics carrier may comprise a first main surface and a second main surface opposed to each other and separated by a thickness of the electronics carrier. The second main surface is closer to the motor shaft than the first main surface. The electronics carrier may comprise the above-mentioned single non-flexible printed circuit board including both the first and second main surfaces. Further, it is preferred that the electronics carrier may be supported by the intermediate support part. More preferably, the second main surface seats on a first surface of the intermediate support part. The second surface of the intermediate support part, as explained below, may be adapted for receiving the first gear assembly and/or the selector gear assembly.

Preferably, the motor control unit may be coupled to the electronics carrier (PCB), preferably, to the first main surface. Further, the sensing connection means and/or the electrical power connection means may be coupled to the electronics carrier (PCB), preferably, to the first main surface.

When the connecting system comprises the one or more pins, it may be preferred that said one or more pins are arranged in the second main surface. This is, the second main surface of the electronics carrier comprises or receives the one or more pins for connecting at least the BLDC motor body and the motor driver.

Preferably, the second main surface of the electronics carrier comprises one or more capacitors. This is, a plurality of capacitors may be coupled to the second main surface and extend in a direction perpendicular to the plane XY towards the second housing part. More preferably, the selector axis of rotation may be arranged therebetween the first axis of rotation and at least one capacitor.

It is preferred that the electronics carrier may further comprise an actuator connection means. The actuator connection means may preferably be an actuator connector device. In any case, the actuator connection means may comprise or be configured to receive one or more pins to transmit electric power and/or control data, or may be configured to receive an actuator control wiring. More preferably, the actuator connection means may be coupled to the second main surface of the electronics carrier. Further, the actuator housing comprises an actuator through opening for arranging through an actuator control wiring or a portion of the actuator connection means. It is still more preferred that the actuator through opening may be arranged in the second housing part.

As stated above, the motor shaft may be arranged substantially parallel to the electronics carrier. Further, the motor shaft may be arranged therebetween the electronics carrier and the second housing part.

The motor shaft may comprise a gear means adapted for engaging the first gear assembly. Preferably, said gear means of the motor shaft may be a worm gear including a shaft provided with a spiral thread that engages with the first gear assembly. It allows to transmit mechanical power to the first gear assembly.

The first gear assembly may comprise a first gear body and a first pinion. The first gear body may include a plurality of gear teeth arranged on a periphery thereof. Preferably, the gear means of the motor shaft may engage with the first gear body of the first gear assembly. More preferably, the worm gear of the motor shaft may particularly engage with the gear teeth of the first gear assembly. Also, the gear teeth of the first gear assembly may be a helical gear. The first gear body may extend outward from the first axis of rotation defining an upper surface and a bottom surface, wherein the periphery thereof directly connects said upper and bottom surface. The first pinion may be attached to or being an integral part of the first gear body. Preferably, the first pinion may protrude perpendicular from the first gear body, e.g. the bottom surface of the first gear body, in a direction away from the XY plane. The first gear assembly may further comprise a first shaft member, wherein the first axis of rotation is coincident with the longitudinal axis of the first shaft member. Therefore, the first shaft member may be arranged through the geometrical center of the first gear body and/or the first pinion. Furthermore, the first shaft member may be attached to or being an integral part of at least one of the first gear body and the first pinion.

The first pinion may be defined as a gear means provided with a number of teeth designed to mesh with a larger wheel or rack, e.g. the selector gear body, that includes a greater number of teeth. This is, the first pinion is smaller than the first gear body and the selector gear body.

At least a portion of the first gear assembly and the motor shaft may be located substantially at the same distance from the plane XY. Preferably, the first gear body and the motor shaft may be located substantially at the same distance from the plane XY. More preferably, the motor shaft may be closer to the plane XY than the first pinion.

The selector gear assembly may comprise a selector gear body. The selector gear body may include a plurality of gear teeth arranged on a periphery thereof. Preferably, the first gear assembly may engage with the selector gear body. More preferably, the first pinion of the first gear assembly may particularly engage with the gear teeth of the selector gear assembly. It is even more preferred that the gear teeth of the selector gear assembly may be a straight-cut gear, e.g. spur gears. The selector gear body may extend outward from the selector axis of rotation defining an upper surface and a bottom surface, wherein the periphery thereof directly connects said upper and bottom surface. The first pinion may directly engage with the selector gear body. The selector gear assembly may further comprise a selector shaft member, wherein the selector axis of rotation is coincident with the longitudinal axis of the selector shaft member. Therefore, the selector shaft member may be arranged through the geometrical center of the selector gear body. Furthermore, the selector shaft member may be attached to or being an integral part of at least one of the selector gear body.

Further, the selector gear body may be located further away from the plane XY than the first gear body. This is, the first gear body may be arranged between the electronics carrier and the selector gear body. In other words, the first gear body may be arranged between the electronics carrier and the selector gear body. It may be advantageous that at least a portion of the motor body is arranged between the plane XY and the selector gear body. For example, the portion of the BLDC motor body configured to move the motor shaft may be arranged between the electronics carrier and the selector gear body.

Preferably, the selector axis of rotation may be arranged further away from the motor axis of rotation than the first axis of rotation.

It is preferred that the selector gear body may be arranged below a portion of the motor body. In other words, the selector gear body may be located further away from the plane XY than the motor shaft and at least a portion of the motor body. Furthermore, a projection of the motor body on the plane XY overlaps a projection of at least a portion of the selector gear assembly on the plane XY. Preferably, when the motor body is projected on the plane XY it may overlap a projection of the selector gear body on the plane XY. The word projection or projected may be understood within the meaning of the present invention as intersecting or reproducing a spatial object, e.g. the motor body or the selector gear body, on a flat surface, e.g. the plane XY, by projecting its points to said flat surface. Thus, when the motor body and the selector gear body are both projected to the plane XY, at least a portion of said projections occupy the same area.

Preferably, the selector gear assembly may comprise a first end configured to connect to the above-mentioned output shaft. In particular, the selector shaft member may comprise the first end. The first end of the selector shaft member may be adapted for connecting, e.g. attaching or receiving, the output shaft. It is still possible that the output shaft may be attached to or being part of a vehicle gearbox actuator.

Preferably, the selector gear assembly may comprise a second end configured to receive a magnet. In particular, the selector shaft member may comprise said second end. More preferably, the first end and the second end are opposite ends of the selector shaft member. The selector gear body may be arranged between the first and second ends of the selector shaft member. It may be even more preferred that a distance of the first end to the selector gear body may be similar to or substantially the same as a distance of the second end to the selector gear body.

The present mechanical transmission actuator may be further provided with a first sensor configured to detect a position of the selector gear assembly or at least a portion thereof. Also, the first sensor may be coupled to the electronics carrier, preferably, to the second main surface.

In use, the first sensor and the magnet may be connected to each other. Therefore, the first sensor may be capable of detecting the position of the magnet. The magnet may be radially polarized, so that the first sensor may be configured to detect the orientation of the polarization. Thus, the first sensor may be configured to detect the orientation of the magnetic field of the magnet. There may be provided a constant (controlled) airgap between the magnet and the first sensor.

An electronic control unit may be further provided in the present mechanical transmission actuator. Said electronic control unit may be electrically connected to the above-mentioned motor control unit. In fact, it is preferred that the motor control unit and said electronic control unit may be integrated into a single component. It may include a processor. The electronics carrier may comprise said electronic control unit, i.e. the processor may be coupled to the electronics carrier. The processor may process the selector signal obtained by the first sensor. The processor may thus process and/or generate a position data. In this way, the electronic control unit may be configured to determine the position of the selector gear assembly. The motor control unit may be configured to receive the above-mentioned sensing signal and the selector signal obtained by the first sensor indicative of the position of the selector gear assembly. The motor control unit may be configured to generate the control instruction based on said sensing signal and the selector signal obtained by the first sensor.

The first shaft member may include a first end and a second end, wherein the first gear body and the first pinion are in an intermediate portion therebetween the first and the second end. Preferably, the first shaft member may cross the first gear body and the first pinion. Similarly, the selector gear body may be arranged in an intermediate portion therebetween the above-mentioned first end and second end of the selector shaft member. Preferably, the selector shaft member may cross the selector gear body.

The above-mentioned intermediate support part may be further provided in the present mechanical transmission actuator arranged in the interior space of the actuator housing. The intermediate support part may be adapted for receiving, e.g. supporting, the first gear assembly and/or the selector gear assembly, particularly, on the second surface. Preferably, the intermediate support part may include a first receiving means for receiving a portion of the first gear assembly. The first receiving means may be configured to receive the second end of the first gear assembly. Also, the intermediate support part may include a second receiving means to receive a portion of the selector gear assembly. Preferably, the second receiving means may be configured to receive the second end of the selector gear assembly. Particularly, the first and/or second receiving means may be arranged on the second surface of the intermediate support part. Further, the first gear body and the selector gear body may be arranged therebetween the intermediate support part and the second housing part. Also, the selector gear body may be arranged therebetween the intermediate support part and the second housing part. Further, the motor shaft may be arranged therebetween the intermediate support part and the second housing part. Also, the electronics carrier may be arranged therebetween the first housing part and the intermediate support part.

The above-mentioned motor support bracket may be adapted for supporting the BLDC motor body. Also, the motor support bracket may comprise a wiring receiving means for grabbing the electrical power wiring and/or sensing wiring. Preferably, the motor support bracket is an integral part of or attached to the intermediate housing part.

The first gear assembly and the selector gear assembly may be retained at least along the direction perpendicular to the XY plane by the intermediate support part and the second housing part. Furthermore, the selector gear assembly may be further retained at least along the direction perpendicular to the XY plane by at least said intermediate support part as explained further below. This is, the second housing part may further include a first and a second receiving elements for receiving the first end of the first gear assembly and the first end of the selector gear assemblies respectively. Said first and second receiving elements may be attached to or being an integral part of the second housing part (being a portion of the second housing part).

As explained, the electronics carrier may be supported by the intermediate support part. This is, the intermediate support part is further adapted for supporting the electronics carrier. More preferably, the intermediate support part may include at least two, preferably three or more, (upward) projections where the electronics carrier is arranged, e.g. seated, for example, on the first surface of the intermediate support part. Said (upward) projections are to be understood as projections extending substantially perpendicular to the plane XY, e.g. perpendicular to the electronics carrier, in a direction towards a first housing part. In short, said projections may extend substantially perpendicular to the plane XY in a direction away from the motor shaft. The electronics carrier may be attached to the intermediate support part through fastening means, preferably, a screw passing through the projection.

An aspect of the present invention is to provide a method of assembling a mechanical transmission actuator for a vehicle as stated in claim 15.

The method comprises:
- preferably, fixing the BLDC motor body to a motor support bracket, more preferably, the motor housing abuts the motor support bracket;
- preferably, arranging an electronics carrier on a plane XY, wherein the first axis of rotation and the selector axis of rotation are arranged substantially perpendicular to the plane XY, and wherein the motor axis of rotation is arranged substantially parallel to the plane XY;
- preferably, connecting the BLDC motor body to a motor control unit;
- preferably, connecting the motor control unit to a motor driver;
- preferably, connecting the motor driver to the BLDC motor body;
- preferably, coupling a first sensor to the electronics carrier;
- preferably, connecting an output shaft to a first end of a selector gear assembly;
- mounting a magnet to a selector shaft member, preferably, by inserting the magnet into a magnet support and mounting the magnet support to an end of the selector shaft member;
- connecting a first gear assembly to the motor shaft, wherein the first gear assembly defines a first axis of rotation;
- connecting a selector gear assembly to the first gear assembly, wherein the selector gear assembly defines a selector axis of rotation such that, in use, the motor axis of rotation is arranged substantially perpendicular to the first axis of rotation and the selector axis of rotation, preferably, establishing a communication between the magnet and the first sensor; and
- preferably, attaching a first housing part and a second housing part to each other so as to form an interior space for enclosing the motor body, the motor shaft, the electronics carrier, and the first and selector gear assemblies.

Preferably, a method of operating a mechanical transmission actuator for a vehicle comprises.
- producing, by a BLDC motor body, a generated torque;
- moving a motor shaft by the generated torque, and wherein the motor shaft defines a motor axis of rotation;
- moving a first gear assembly connected the motor shaft, wherein the first gear assembly defines a first axis of rotation;
- moving the selector gear assembly connected to the first gear assembly, wherein the selector gear assembly defines a selector axis of rotation such that, in use, the motor axis of rotation is arranged substantially perpendicular to the first axis of rotation and the selector axis of rotation;
- preferably, detecting a position of the selector gear assembly;
- preferably, generating, by an electronic control unit, a selector signal based on the position of the selector gear assembly;
- preferably, detecting a position of the rotor relative to the stator;
- preferably, transmitting a sensing signal to a motor control unit, wherein the sensing signal comprises the detected position of the rotor relative to the stator;
- preferably, generating, by the motor control unit, a control instruction to a motor driver based on the sensing signal and optionally the selector signal; and
- preferably, producing, by the motor driver, an electrical power signal for creating the generated torque.

Preferably, it is provided a motor vehicle transmission system that comprises the above-mentioned mechanical transmission actuator, a shifter device, and a gearbox. The shifter device may be configured to be connected to the mechanical transmission actuator for operating said mechanical transmission actuator as required. The shifter device may be a shift-by-wire type configured to generate a shift signal to be received by the mechanical transmission actuator. Furthermore, an output shaft may connect the mechanical transmission actuator to the gearbox. Therefore, the mechanical transmission actuator may actuate the gearbox. The gearbox may be configured to transfer the power produced by an engine to the drive wheels of the vehicle. In this way, a vehicle user may interact to the shifter device so as to change gears i.e. change the gear ratio between an input gear connected to the engine side and an output gear connected to the wheels side.

### BRIEF DESCRIPTION OF THE DRAWINGS

Non-limiting examples of the present disclosure will be described in the following, with reference to the appended figures, in which:
Figure 1 is a perspective view that shows the connection of the BLDC motor body, the first gear assembly and the selector gear assembly.
Figure 2 is an exploded view of an example of the mechanical transmission actuator.
Figure 3 is a perspective view that shows an example of a mechanical transmission actuator comprising a motor body connected to a first gear assembly that, in turn, is connected to a selector gear assembly.
Figure 4 is a perspective view that shows an example of a mechanical transmission actuator comprising a motor body electrically connected to components coupled to an electronics carrier.
Figure 5 is a perspective view showing an intermediate support part for supporting the electronics carrier, wherein said intermediate support part comprises a motor support bracket for fixing the BLDC motor body.
Figure 6 is a cross-section view that shows a selector gear assembly and a first sensor coupled to the electronics carrier, wherein a communication is provided between a magnet of the selector gear assembly and first sensor.
Figure 7 is a cross-section view of an example of the mechanical transmission actuator that shows the direct connection between a pinion of the first gear assembly and a selector gear body of the selector gear assembly.
Figure 8 is a view of an example of the mechanical transmission actuator that shows that the electronics carrier defines a plane XY, wherein said plane XY is arranged therebetween a portion of the BLDC motor body and another portion of the BLDC motor body. It further shows the motor shaft is arranged below the electronics carrier. Also, figure 8 shows the direct connection between the motor shaft and a first gear body, and the direct connection between the pinion of the first gear assembly and the selector gear body.
Figure 9 is a perspective view of a BLDC motor body connected to a motor shaft and a connecting system that comprises, in turn, a sensing signal connecting system and an electrical power connecting system.
Figures 10A and 10B are plan views of the first and second main surfaces of the electronics carrier respectively.
Figure 11 is a plan view that shows an indentation for arranging the BLDC motor body therein.
Figure 12 is a front view wherein the connecting system comprises one or more pins.
Figure 13 is a detail view of the one or more pins of the connecting system.

The figures refer to example implementations and are only be used as an aid for understanding the claimed subject matter, not for limiting it in any sense.

### DETAILED DESCRIPTION OF EXAMPLES

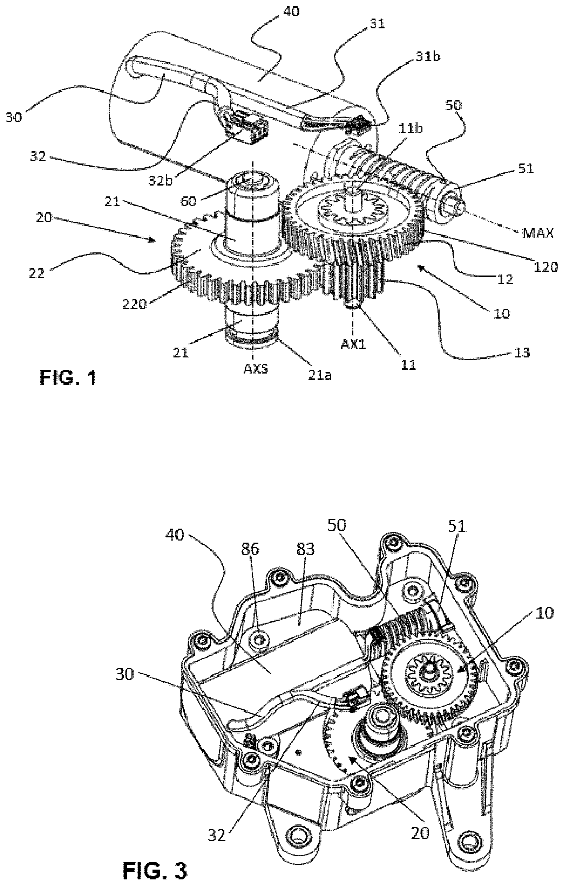

Figure 1 shows a mechanical transmission actuator for a vehicle comprising: an electric motor that comprises a motor body 40, a motor shaft 50 connected to the motor body 40, a first gear assembly 10 connected to the motor shaft 50, and a selector gear assembly 20 connected to the first gear assembly 10.

The motor body 40 is configured to produce a generated torque using electric current applied thereto. In particular, the motor body 40 is an electric brushless direct current (BLDC) motor for transferring torque to the gearbox (not shown) through the output shaft (not shown). The BLDC motor body 40 is thus configured to transform electric energy into motion when a request by a user is remotely sent by an electronic gearshift device (eShifter) such as a shift-by-wire device (not shown) to the gearbox actuator (not shown).

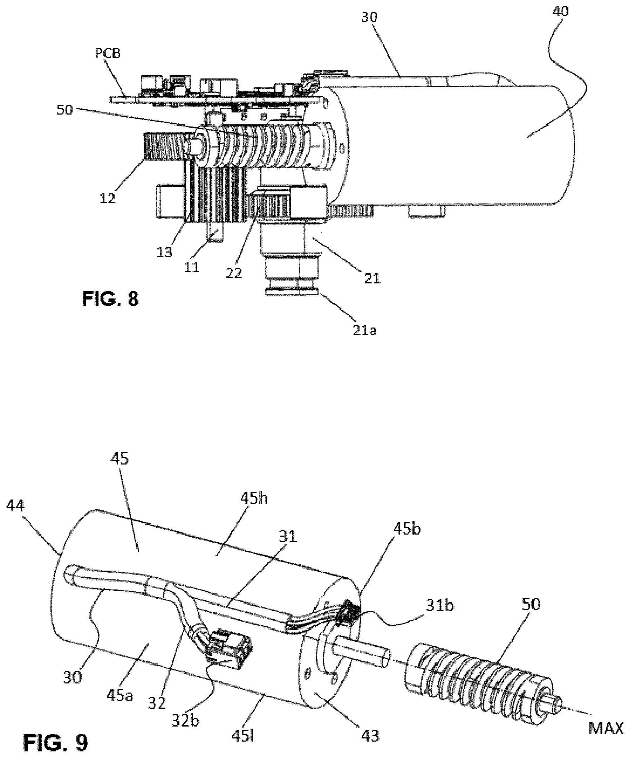

The motor shaft 50 is driven in rotation by the electric motor. This is, the motor shaft 50 is moved by the generated torque of the BLDC motor body 40. In examples, the motor shaft 50 may be part of the BLDC motor body 40. This is, in examples, the electric motor comprises the BLDC motor body 40 and the motor shaft 50, wherein the motor shaft 50 is mounted to the BLDC motor body 40 by pressure (see also figure 9). Further, the motor shaft 50 defines a motor axis of rotation MAX as described below. The motor shaft 50 comprises a gear means adapted for engaging the first gear assembly 10. In particular, said gear means of the motor shaft 50 is a worm gear. Said worm gear is provided with a spiral thread that engages with the first gear assembly 10. The mechanical transmission actuator further comprises a bearing means 51 which restricts the movement of the motor shaft 50, allowing only the desired movement of rotation. The bearing means 51 is supported by an intermediate part (shown in figure 3).

The BLDC motor body 40 is a triphasic motor. The rotor includes a permanent-magnet rotor and the stator includes three coils or multiple of three coils. The rotor rotates relative to the stator when electric current of the stator is switched.

The BLDC motor body 40 is a portable one single-unit. In particular, the BLDC motor body 40 comprises a rotor, a stator, and a motor housing such that the motor housing encloses at least the rotor and the stator. Therefore, the motor housing defines a motor interior space therein to receive both the rotor and the stator. This helps reduce the complexity of the assembly process since it can be moved unitarily and independently of other elements, components or parts. The size of the BLDC motor body 40 does not depend on the external features thereof such as the size of the first gear assembly 10 or the selector gear assembly 20. It is possible because the BLDC motor body 40 is not integrally formed around or surrounding the first gear assembly 10 and/or the selector gear assembly 20. It further enables to employ said BLDC motor body 40 even when the exterior shape and size of the actuator, and the speed and torque requirements are different. A more standardized gearbox actuator is achieved since the BLDC motor body 40 does not necessarily have to be customized each time when changing at least one of the shape, size, speed, and torque requirements of said actuator. Minor adjustments may be required such as to increase or reduce the number of teeth of the first gear assembly 10 and/or the selector gear assembly 20.

Figure 9 shows that the BLDC motor body 40 comprises a motor housing that includes a front surface 43, a rear surface 44 and a lateral surface 45. The rear surface 44 is arranged parallel and opposed to the front surface 43. The front surface 43 connects or receives the motor shaft 51 or an element that directly connects to the motor shaft 51. The lateral surface 45 joins the front 43 and rear 44 surface and is, for example, curved. In particular, the BLDC motor body 40 has a shape of a cylinder. The lateral surface 45 comprises a first lateral surface 45a and second lateral surface 45b opposed to each other. A portion of the BLDC motor body 40 closest to (a front surface of) a first housing part 81 that will be described further below is referred herein as the highest portion 45h of the BLDC motor body. A portion of the BLDC motor body 40 arranged furthest away from the highest portion is referred herein as the lowest portion 45I of the BLDC motor body.

As shown in figure 1, the first gear assembly 10 defines a first axis of rotation AX1 that will be explained below. Also, the first gear assembly 10 comprises a first gear body 12 and a first pinion 13. The first gear body may include a plurality of gear teeth 120 arranged on a periphery thereof. Particularly, the gear means of the motor shaft 50 engages with the first gear body 12. In particular, the worm gear of the motor shaft 50 engages with the gear teeth 120. More in particular, the gear teeth 120 is helical. As shown in figure 1, the first gear body 12 extends radially outward from the first axis of rotation AX1 defining an upper surface and a bottom surface, wherein the periphery thereof directly connects said upper and bottom surface. In examples, the first pinion 13 is attached to the first gear body. As shown, the first pinion 13 protrudes perpendicular from the bottom surface of the first gear body 12, in a direction away from an XY plane that will be described further below. The first pinion 13 is a gear means provided with a number of teeth designed to mesh with a selector gear body 22 which includes a greater number of teeth 220. As shown, the first pinion 13 is smaller than the first gear body 12 and the selector gear body 22.

The first gear assembly 10 further comprises a first shaft member 11. The first shaft member 11 is attached, by interference fit, to the first gear body and/or the first pinion. Other types of attachments, or a machining process, or an overmouding process (not shown) may be of course possible. Further, the first axis of rotation AX1 is coincident with the longitudinal axis of the first shaft member 11. As shown, the first shaft member 11 is arranged through the geometrical center of the first gear body 12 and the first pinion 13.

As shown in figure 1, the selector gear assembly 20 is (directly) connected to the first gear assembly 10. In this way, the mechanical power of the first gear assembly 10 is transferred to the selector gear assembly 20. Also, the selector gear assembly 20 defines a selector axis of rotation AXS that will be explained below. Also, the selector gear assembly 20 comprises the selector gear body 22. The selector gear body 22 includes a plurality of gear teeth 220 arranged on a periphery thereof. Particularly, the first gear assembly 10 engages with the selector gear body 22. More in particular, the first pinion 13 particularly engage with the gear teeth 220. In examples, the gear teeth 220 are straight-cut gear teeth, e.g. spur gears. The selector gear body 22 extends radially outward from the selector axis of rotation AXS defining an upper surface and a bottom surface, wherein the periphery thereof directly connects said upper and bottom surface.

The selector gear assembly 20 further comprises a selector shaft member 21. As shown, the selector shaft member 21 is attached to the selector gear body 22. Further, the selector axis of rotation AXS is coincident with the longitudinal axis of the selector shaft member 21. As shown, the selector shaft member 21 is arranged through the geometrical center of the selector gear body 22.

Figure 1 shows that the motor axis of rotation MAX is arranged substantially perpendicular to the first axis of rotation AX1, and the selector axis of rotation AXS. Thus, the first axis of rotation AX1 and the selector axis of rotation AXS are arranged parallel to each other. Figure 1 further shows a connecting means 30, a sensing signal connection means 31b, and an electrical power connection means 32b that will be explained further below.

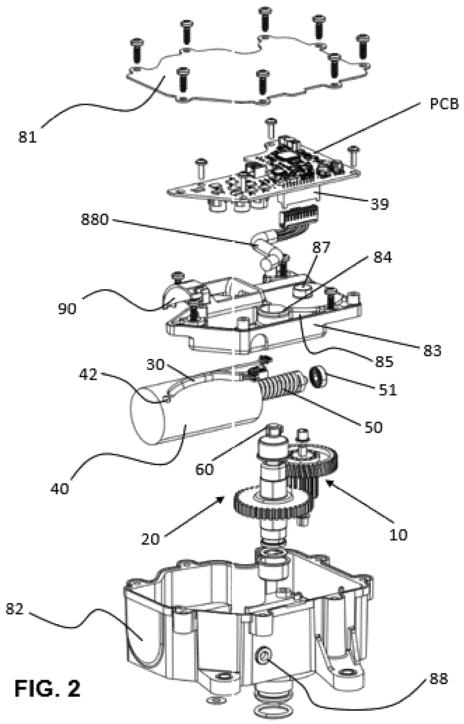

Figures 2, 4-8 show that the mechanical transmission actuator further comprises an electronics carrier PCB arranged on a plane XY. The electronics carrier PCB comprise a printed circuit board. Further, the electronics carrier PCB comprises electronic components coupled to a substrate.

As shown in figures 2, 6-8, the first axis of rotation AX1 and the selector axis of rotation AXS are arranged substantially perpendicular to the plane XY. This is, the electronics carrier PCB is arranged substantially perpendicular to the first axis of rotation AX1, and the selector axis of rotation AXS. The motor axis of rotation MAX is arranged substantially parallel to the plane XY. As seen in the drawings, the motor shaft 50 is arranged below the electronics carrier PCB.

In examples, at least a portion of the first gear body 12 and the motor shaft 50 are located substantially at the same distance from the electronics carrier PCB. As shown in figure 8, the motor shaft 50 is closer to the electronics carrier PCB than the first pinion 13. Further, the selector gear body 22 is located further away from the electronics carrier PCB than the first gear body 12. This is, the first gear body 12 is arranged between the electronics carrier PCB and the selector gear body 22.

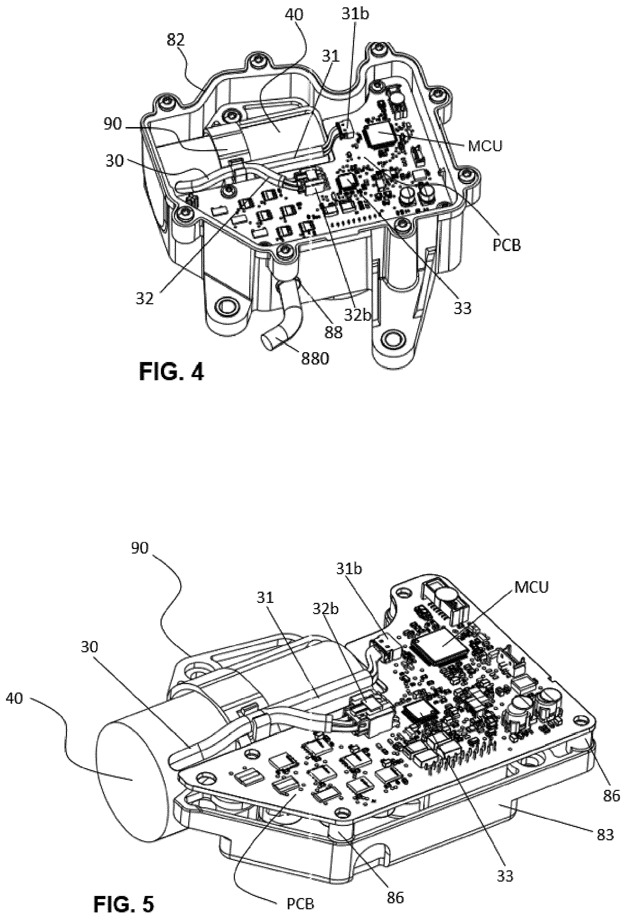

It may be advantageous that at least a portion of the motor body 40 is arranged between the electronics carrier PCB and the selector gear body 22. Particularly, as shown in figure 5, the motor body 40 is arranged on a motor support bracket 90 that may be part of or attached to an intermediate support part 83 as described in detail further below. The motor shaft 50 and a portion of the motor body 40 are arranged therebetween the intermediate support part 83 and the selector gear body 22.

Figures 4, 5, 10A, 10B and 11 show that the electronics carrier PCB comprises an indentation I adapted for arranging the BLDC motor body 40 therein. In particular, the electronics carrier PCB surrounds at least two surfaces of the BLDC motor body 40. In particular, the electronics carrier PCB surrounds a portion of the front surface 43 and a portion of the lateral surface 45, for example, the first lateral surface 45a. This is, the electronics carrier PCB includes a general L-shape. According to an example not shown, it may be still possible that the electronics carrier PCB surrounds a portion of the front surface 43, a portion of the first lateral surface 45a, and a portion of the rear surface 44. This is, the electronics carrier PCB includes a general U-shape. In any case, the electronics carrier PCB comprises the above-mentioned indentation I to receive the BLDC motor body 40 therein such that said BLDC motor body 40 is at least partially surrounded by the electronics carrier PCB. As shown, the plane XY is arranged therebetween the highest portion 45h and the lowest portion 45I of the BLDC motor body. It provides the advantage of reduce the size of the mechanical transmission actuator at least on the selector axis of rotation AXS.

Figures 1, 6-8 show the selector gear assembly 20 that includes the selector shaft member 21 that comprises the first end 21a. The first end 21a is configured to connect to the output shaft (not shown). In particular, the output shaft may further be attached to or being part of a vehicle gearbox actuator (not shown).

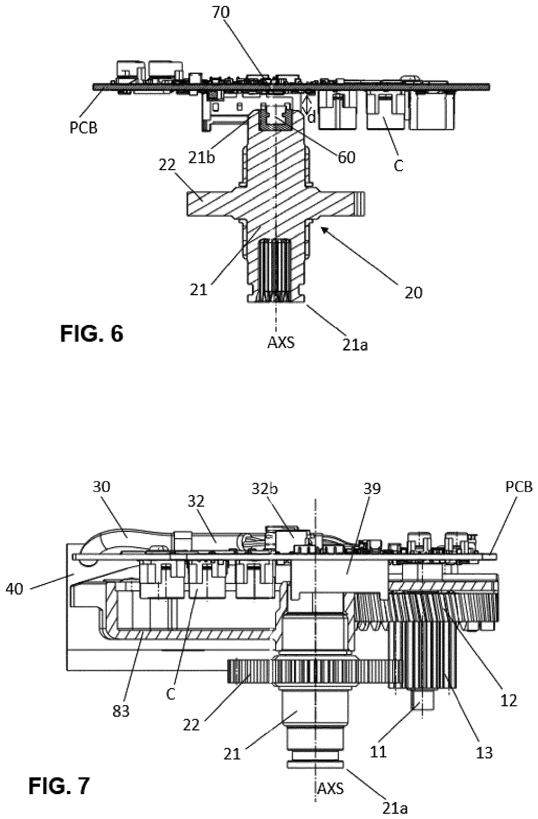

As shown in figure 6, the selector gear assembly 20 comprises a second end 21b configured to receive a magnet 60. In particular, the selector shaft member 21 comprises said second end 21b. The first end 21a and the second end 21b are opposite ends of the selector shaft member 21. The selector gear body 22 is arranged between the first and second ends 21a, 21b. In particular, a distance of the first end 21a to the selector gear body 22 is similar to or substantially the same as a distance of the second end 21b to the selector gear body 22.

In short, the selector shaft member 21 comprises the first end 21a configured to connect to the output shaft. The selector shaft member 21 comprises the second end 21b configured to receive the magnet 60. Further, said second end 21b or a portion near thereof is received in the intermediate support part 83. Furthermore, the intermediate support part 83 is adapted for allowing a portion of the selector shaft member 21 to rotate therein.

In examples, the first housing part 81 and a second housing part 82 are adapted for being attached to each other so as to form an interior space for enclosing the BLDC motor body 40, the motor shaft 50, the first gear assembly 10, and the selector gear assembly 20. Figure 2 shows that first housing part 81 is a cover, e.g. substantially plane. Indeed, the first housing part 81 comprises a front surface that may be arranged parallel to the electronics carrier PCB. The second housing part 82 comprises a rear surface and a lateral surface. The rear surface is arranged parallel to the front surface of the first housing part 81. Furthermore, the lateral surface of the second housing part 82 extends to a direction towards the front surface, for example, substantially perpendicular to the rear surface.

Figures 2, 3 and 5 show the above-mentioned intermediate support part 83. The intermediate support part 83 is adapted for receiving or supporting at least the first shaft member 11 and also the selector shaft member 21. More in particular, figure 2 shows that the intermediate support part 83 comprises a first receiving means 87 configured to receive a second end 11b of the first shaft member. Also, figure 2 shows that the intermediate support part 83 comprises a receiving structure 84 protruding along the selector axis of rotation AX3 in a direction to the electronics carrier PCB. Said receiving structure 84 protrudes from a base 85 of the intermediate support part. The receiving structure 84 is hollow. As a consequence, the receiving structure 84 receives a portion of the selector shaft member 21, in particular, a portion of the second end 21b of the selector shaft member. The receiving structure 84 includes a circular cross section. This is, the receiving structure 84 comprises a wall that includes an inner surface being circular. Thus, the receiving structure 84 is adapted for allowing the second end 21b to rotate therein as required.

As shown, the electronics carrier PCB is supported by the intermediate support part 83. This is, the intermediate support part 83 is further adapted for supporting the electronics carrier PCB. Figure 5 shows the intermediate support part 83 is provided with a plurality of projections 86, particularly arranged at or near the edges of said intermediate support part 83, where the electronics carrier PCB is arranged, e.g. seated. The plurality of projections 86 extend substantially perpendicular to the plane XY in a direction towards the first housing part 81. The electronics carrier PCB is attached to the intermediate support part 83 through fasteners, e.g. screws, in examples, each of them passing through the electronics carrier PCB and fastened, e.g. screwed, to each projection 86.

As shown in figure 2, the electronics carrier PCB is located therebetween the first housing part 81 and the intermediate support part 83. In the shown example, the motor support bracket 90 is attached to the intermediate support part 83 for fixing the motor body 40. In particular, the motor body 40 is mounted on the second housing part 82 and the intermediate part 83, e.g. the motor support bracket 90, as explained below. As shown, at least a portion of the motor body 40, the motor shaft 50, the first gear assembly 10 and the selector gear assembly 20 are located therebetween the intermediate support part 83 and the second housing part 82.

In examples, the second housing part 82 may contribute to the fixation of the motor body 40. For example, the motor body 40 may be clamped or sandwiched therebetween the motor support bracket 90 and the second housing part 82.

As shown in figure 6, the electronics carrier PCB comprises the first sensor 70 such that, in use, said first sensor 70 and the magnet 60 are connected to each other. Therefore, the first sensor 70 is capable of detecting the position of the magnet 60. The magnet 60 and the first sensor 70 are separated to each other by an airgap d. Said airgap d is a controlled airgap. Additionally, the electronics carrier PCB further comprises an electronic control unit that, in turn, may include a processor. The electronic control unit is configured to at least determine the position of the selector gear assembly 20 based at least on the signal of the first sensor 70. Said electronic control unit may be connected to the motor control unit MCU (not shown in figure 6) or may be part of or integrated into the motor control unit MCU.

The electronics carrier PCB comprises further electronic components on at least the surface closest to the intermediate support part 83. As shown, the first sensor 70 faces the receiving structure 84, which in turn includes an opening for placing the magnet 60 so as to achieve a good communication between the magnet 60 and the first sensor 70. Due to that the electronics carrier PCB comprises electronic components on the surface closest to the intermediate support part 83, the intermediate support part 83 has a valleys and peaks shape to enclose the different electronic components, such as the first sensor 70 arranged in a peak area and a capacitor that will be explained further below arranged in a valley area.

The first sensor 70 is in connection to the magnet 60. This is, the magnet 60 and the first sensor 70 cooperate to sense rotation of the selector gear assembly 30. The relationship between the magnet 60 and the first sensor 70 is such that the sensor 70 senses changes in the magnetic characteristics of the magnet 60 as the magnet 60 rotates, and outputs a signal that corresponds to the rotational position of the magnet 60 based on the detected magnetic characteristic. The first sensor 70 may be a sensor in the model line MLX by MELEXIS, or an AS5030 (or similar model of angle position on-axis sensor) by AMS, for example. These are merely examples of sensors that can detect a change in the rotational position of the magnet due to the changes in the polarity position, magnetic field strength, and the like.

Based on the detected angular position of the magnet 60, the first sensor 70 can output a position signal, i.e. a selector signal. The position signal or selector signal is used to ensure the position of the output shaft. If it did not exist, the actuator could not determine if the output shaft has moved to the correct position. Thus, the position signal is to be compared with a required position and thus be able to check that the movement that the output shaft is performing due to the actuator is the one required and not another. For example, the position signal may be used to activate a by-wire change in the selected operating gear of the vehicle. Furthermore, each detected angle of rotation of the magnet can be calibrated to match a corresponding operating gear selection.

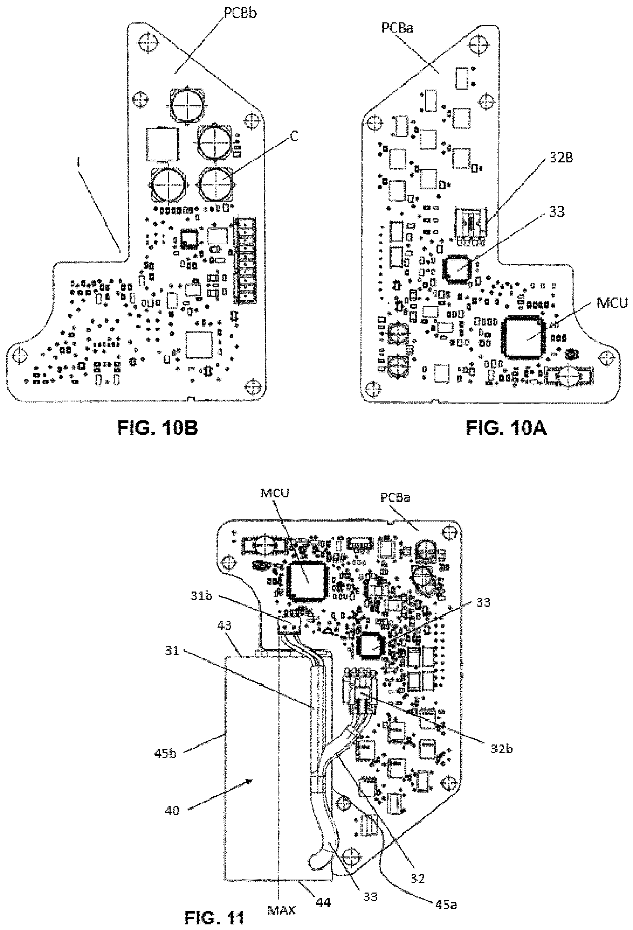

Figures 10A and 10B show the electronics carrier PCB comprises a first main surface PCBa and a second main surface PCBb being parallel to each other and spaced apart by the thickness of the electronics carrier PCB. The second main surface PCBb is arranged closer to the magnet 60 than the first main surface PCBa. The first sensor 70 comprises a MELEXIS sensor type. Optionally, the present actuator may further comprise a Hall sensor (not shown).

The first sensor 70 faces the magnet 60. In particular, the MELEXIS sensor type is coupled to the second main surface PCBb, and the Hall sensor may be coupled to the first main surface (not shown). Both the MELEXIS sensor type and the Hall sensor are aligned along the selector axis of rotation AXS. By using two or more sensor types, accuracy and redundancy may be increased.

As shown, the electronics carrier PCB comprises a plurality of capacitors C coupled to the second main surface PCBb that extend in a direction perpendicular to the plane XY towards the second housing part 82, i.e. extending away from the first housing part 81. In particular, the selector axis of rotation AXS is arranged therebetween the first axis of rotation AX1 and the plurality of capacitors C. Said arrangement contributes to achieve a more compact gearbox actuator.

Referring to figure 6, it is shown a plurality of capacitors C that include a portion closer to a plane defined by the selector gear body 22 than the magnet 60. At least one capacitor C has a length greater than the distance d between the magnet 60 and the first sensor 70. In particular, the length of the capacitor C is of between eight and twelve millimetres.

The gearbox actuator further comprises the above-mentioned motor support bracket 90 adapted for supporting or fixing the BLDC motor body 40. In particular, the motor support bracket 90 abuts the exterior surface of the motor housing so as to fix it in place. In this way, the BLDC motor body may be mounted on the present transmission actuator in a quick and easy manner. As shown, the motor support bracket 90 is attached to the intermediate support part 83. Alternatively, it could be an integral part thereof. According to an example not shown, the motor support bracket 90 may be an integral part of or attached to the first housing part 81 or the second housing part 82. Advantageously, the rotor and stator are positioned and fixed as required without directly contacting either an electronics carrier PCB, or the first and second housing parts 81, 82, or the intermediate support part 83, or any structural part apart from the motor housing. The motor support bracket 90 in connection with the motor housing allows to reduce the manufacturing and assembling cost of the present mechanical transmission actuator. In particular, the BLDC motor body 40 may be fixed by sandwiching o clipping. As shown, the BLDC motor body 40 is pressed by the motor support bracket 90 of the intermediate support part 83 and the second housing part 82.

Figure 1 shows that the motor axis of rotation MAX is arranged substantially perpendicular to the first axis of rotation AX1, the second axis of rotation AX2, and the selector axis of rotation AX3. Thus, the first axis of rotation, the second axis of rotation, and the selector axis of rotation AX1, AX2, AX3 are arranged parallel to each other.

As shown in figure 2, the BLDC motor 40 comprises a hole 42 provided in the motor housing, wherein a connecting system 30 passes through (see figures 1,3, 4, 5, 7 9, 11).

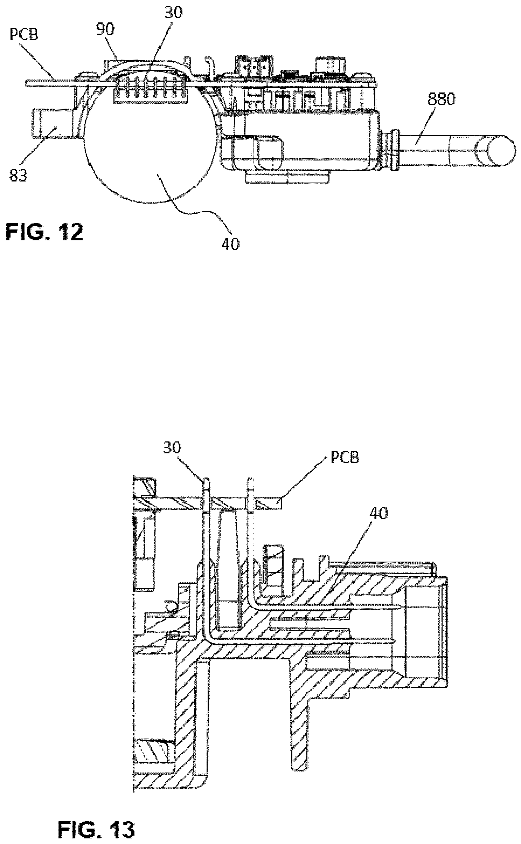

The connecting system 30 comprises a plurality of wires as shown in the example of figures 1 to 11, or one or more pins as shown in the example of figures 12 and 13. The connecting system 30 comprises, in turn, a sensing signal connecting system 31 and an electrical power connecting system 32.

The sensing signal connecting system 31 is configured to connect the motor sensing means (not shown) to sensing connection means 31b. Figures 4, 5, 10A and 11 show that said sensing connection means 31b is coupled to the first main surface PCBa. In turn, the sensing connector means 31b is connected to the motor control unit MCU. Further, the electrical power connecting system 32 is configured to connect the BLDC motor body 40 to the electrical power connection means 32b. Figures 4, 5, 10A and 11 show that said electrical power connection means 32b is coupled to the first main surface PCBa. In turn, the electrical power connection means 32b is connected to a motor driver 33. Also, the motor driver 33 is connected to the motor control unit MCU. As shown, said motor driver 33 is coupled to the first main surface PCBa. Furthermore, the first sensor 70 is connected to the motor control unit MCU.

Figure 10A and 10B show that the sensing connection means 31b, the electrical power connection means 32b, the motor control unit MCU, the motor driver 33 are coupled to the electronics carrier PCB, for example, in the first main surface PCBa. Also, the first sensor 70 is coupled to the electronics carrier PCB, for example, in the second main surface PCBb as shown in figure 6.

The motor control unit MCU receives the sensing signal and the selector signal. As explained above, the sensing signal contains the position of the rotor relative to the stator, whereas the selector signal contains the position of the magnet 60 of the selector gear assembly 20 relative to the first sensor 70.

The motor control unit MCU generates a control instruction to the motor driver 33 based on the received sensing signal and selector signal. In this way, the motor driver 33 produces an electrical power signal for the BLDC motor body 40 to operate as required.

The sensing signal is transmitted from the motor sensing means 41 to the motor control unit MCU by the use of the sensing signal connecting system 31 and the control connector means 31b.

The control instruction is transmitted from the control unit MCU to the motor driver 33. The electrical power signal produced by the motor driver 33 is received by the stator by the use of the electrical power connecting system 32 and the electrical power connection means 32b.

In an example, the motor sensing means (not shown) is arranged inside the motor housing. However, the motor sensing means may be arranged inside or outside the motor housing according to the following configurations:
- The motor sensing means is arranged inside the motor housing. In this configuration, the connecting system 30 is configured to transmit at least the sensing signal and the electrical power signal. For this, the connecting system 30 comprises the sensing signal connecting system 31 and the electrical power connecting system 32.
- The motor sensing means is arranged outside the motor housing. In this configuration, the connecting system 30 is configured to transmit at least the electrical power signal. For this, the connecting system 30 comprises the electrical power connecting system 32 arranged through the hole 42.
- The motor sensing means detects a measurement of an electrical parameter of the motor body 40 such as power consumption or variation of electric current and/or voltage. If the motor sensing means is arranged inside the motor housing, the connecting system 30 comprises the sensing signal connecting system 31 and the electrical power connecting system 32. If the motor sensing means is arranged outside the motor housing, the connecting system 30 comprises the electrical power connecting system 32.

As explained, in the shown example of figures 1-11, the sensing connection means 31b is, in particular, a control connector device for receiving and connecting the control wires. Further, according to the example of figures 12 and 13, the sensing connection means 31b is a control connector device comprising or receiving control pins. According to a possible example (not shown), the sensing connection means 31b may be a fixation means such as a welding means or a conductive adhesive means for fixing the wire or the control pins to the electronics carrier PCB. It helps properly attached the control wires or pins without an intermediate element.

Similarly, in the shown example of figures 1-11, the electrical power connection means 32b is, in particular, an electrical power connector device for receiving and connecting the electrical power wires. Further, according to the example of figures 12 and 13, the electrical power connection means 32b is an electrical power connector device comprising or receiving electrical power pins. According to a possible example (not shown), the electrical power connection means 32b may be a fixation means such as a welding means or a conductive adhesive means for fixing the electrical power wire or pins to the electronics carrier PCB. It helps properly attached the electrical power wires or pins without an intermediate element.

Figures 2 and 4 show that the present mechanical transmission actuator comprises an actuator control connecting system 880. Further, as shown, the second housing part 82 comprises an actuator through opening 88 for arranging through at least a portion of the actuator control connecting system 880. The actuator control connecting system 880 is an actuator control wiring (see figures 2 and 4), or one or more actuator control pins (not shown). The actuator control wiring 880 is connected to an actuator connection means 39 (see figures 2 and 7) that is coupled to the electronics carrier PCB, particularly, to the second main surface PCBb. It allows to receive control data from a device outside the present actuator, e.g. a shift-by-wire type vehicle transmission.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A mechanical transmission actuator for a vehicle comprising:
- a BLDC motor body (40) configured to produce a generated torque using electric current applied thereto;
- a motor shaft (50) moved by the generated torque, wherein the motor shaft (50) defines a motor axis of rotation (MAX);
- a first gear assembly (10) connected to the motor shaft (50), wherein the first gear assembly (10) defines a first axis of rotation (AX1); and
- a selector gear assembly (20) connected to the first gear assembly (10), wherein the selector gear assembly (20) defines a selector axis of rotation (AXS);
wherein the motor axis of rotation (MAX) is arranged substantially perpendicular to the first axis of rotation (AX1) and the selector axis of rotation (AXS),
wherein the BLDC motor body (40) is a single unit and comprises a rotor, a stator, and a motor housing, wherein the motor housing encloses at least the rotor and the stator,
the mechanical transmission actuator further comprises an operation mode and a non-operation mode, **characterized in that**
- in the operation mode, the motor shaft (50) rotates in two opposite directions, wherein a sub-assembly formed at least by the motor shaft (50), the first gear assembly (10) and the selector gear assembly (20) has a torque higher than a predefined operational value, wherein the predefined operational value is 1 Nm; and
- in the non-operation mode, the motor shaft (50) is suitable for being moved in the two opposite directions,
where the sub-assembly formed at least by the motor shaft (50), the first gear assembly (10) and the selector gear assembly (20) has a torque equal to or lower than a predefined non-operational value, wherein the predefined non-operational value is 1 Nm.

2. The mechanical transmission actuator of claim 1, wherein it further comprises a motor sensing means for generating a sensing signal indicative of at least the status of the rotor, preferably, the status of the rotor comprises position or speed of the rotor relative to the stator.

3. The mechanical transmission actuator of claim 1 or claim 2, wherein it further comprises a motor control unit (MCU) configured to generate a control instruction for controlling the produced generated torque.

4. The mechanical transmission actuator of claim 3, wherein the control instruction is based at least on the sensing signal.

5. The mechanical transmission actuator of any of claims 2 - 4, wherein the BLDC motor body (40) comprises the motor sensing means, wherein the motor housing further encloses said motor sensing means.

6. The mechanical transmission actuator of any of claims 1 - 5, wherein the BLDC motor body (40) further comprises a hole (42) provided in the motor housing adapted for receiving through a connecting means (30) that includes a sensing signal connecting means (31) and an electrical power connecting means (32), wherein the sensing signal connecting means (31) is configured to connect the motor sensing means to the motor control unit (MCU), and wherein the electrical power connecting means (32) is configured to electrically connect the BLDC motor body (40) to a motor driver (33), the motor driver (33) being also electrically connected to the motor control unit (MCU).

7. The mechanical transmission actuator of claim 6, wherein it further comprises a sensing connection means (31b) and an electric power connection means (32b), wherein the sensing signal connecting means (31) is configured to connect the motor sensing means to the sensing connection means (31b) that, in turn, is connected to the motor control unit (MCU), and the electrical power connecting means (32) is configured to connect the stator of the BLDC motor body (40) to the electrical power connection means (32b) that, in turn, is connected to the motor driver (33).

8. The mechanical transmission actuator of any preceding claim, wherein it further comprises a first housing part (81), and a second housing part (82) adapted for being attached to each other so as to form an interior space for enclosing the BLDC motor body (40), the motor shaft (50), the first gear assembly (10) and the selector gear assembly (20).

9. The mechanical transmission actuator of any preceding claim, wherein it further comprises an electronics carrier (PCB) arranged on a plane XY, wherein the first axis of rotation (AX1) and the selector axis of rotation (AXS) are arranged substantially perpendicular to the plane XY, and wherein the motor axis of rotation (MAX) is arranged substantially parallel to the plane XY.

10. The mechanical transmission actuator of claim 9, wherein the electronics carrier (PCB) comprises an indentation (I) adapted for arranging the BLDC motor body (40) therein.

11. The mechanical transmission actuator of any of claims 9 - 10, wherein the electronics carrier (PCB) comprises a first main surface (PCBa) and a second main surface (PCBb) opposed to each other, the second main surface being closer to the motor shaft (50) than the first main surface, wherein the mechanical transmission actuator further comprises one or more capacitors (C) coupled to the second main surface (PCBb) of the electronics carrier, and wherein the selector axis of rotation (AXS) is arranged therebetween the first axis of rotation (AX1) and the one or more capacitors (C).

12. The mechanical transmission actuator of any of claims 9 - 11, wherein the mechanical transmission actuator further comprises a first sensor (70) coupled to the electronics carrier (PCB), the first sensor (70) being configured to detect a position of the selector gear assembly (20) or at least a portion thereof.

13. The mechanical transmission actuator of claim 12, wherein the electronic carrier (PCB) comprises a first sensor (70), wherein the selector gear assembly (20) further comprises a magnet (60) connected to the first sensor (70) such that, in use, an airgap (d) is provided between the magnet (60) and the first sensor (70).

14. The mechanical transmission actuator of claim 13, wherein the selector gear assembly (20) comprises a first end (21a) and a second end (21b), wherein the first end (21a) is configured to connect to an output shaft, and the second end (21b) is configured to receive the magnet (60).

15. A method of assembling a mechanical transmission actuator for a vehicle comprising:
- providing a BLDC motor body (40) configured to produce a generated torque using electric current applied thereto, wherein a motor shaft (50) is moved by the generated torque, and wherein the motor shaft (50) defines a motor axis of rotation (MAX), wherein the BLDC motor body (40) is a single unit and comprises a rotor, a stator, and a motor housing, wherein the motor housing encloses at least the rotor and the stator;
- connecting a first gear assembly (10) to the motor shaft (50), wherein the first gear assembly (10) defines a first axis of rotation (AX1);
- connecting a selector gear assembly (20) to the first gear assembly (10), wherein the selector gear assembly (20) defines a selector axis of rotation (AXS) such that, in use, the motor axis of rotation (MAX) is arranged substantially perpendicular to the first axis of rotation (AX1) and the selector axis of rotation (AXS);
- **characterized in that** in an operation mode, the motor shaft (50) rotates in two opposite directions, wherein a sub-assembly formed at least by the motor shaft (50), the first gear assembly (10) and the selector gear assembly (20) has a torque higher than a predefined operational value, wherein the predefined operational value is 1 Nm; and
- wherein, in a non-operation mode, the motor shaft (50) is suitable for being moved in the two opposite directions, wherein the sub-assembly formed at least by the motor shaft (50), the first gear assembly (10) and the selector gear assembly (20) has a torque equal or lower than a predefined non-operational value, wherein the predefined non-operational value is 1 Nm.

## Patentansprüche

1. Mechanischer Getriebeaktuator für ein Fahrzeug, umfassend:
- einen BLDC-Motorkörper (40), der so konfiguriert ist, dass er unter Verwendung von an ihn angelegtem elektrischem Strom ein Drehmoment erzeugt;
- eine Motorwelle (50), die durch das erzeugte Drehmoment bewegt wird, wobei die Motorwelle (50) eine Motordreh Selektordrehachse achse (MAX) definiert;
- eine erste Getriebebaugruppe (10), die mit der Motorwelle (50) verbunden ist, wobei die erste Getriebebaugruppe (10) eine erste Drehachse (AX1) definiert; und
- eine mit der ersten Getriebebaugruppe (10) verbundene Selektorgetriebebaugruppe (20), wobei die Selektorgetriebebaugruppe (20) eine Selektordrehachse (AXS) definiert;
wobei die Motordrehachse (MAX) im Wesentlichen senkrecht zur ersten Drehachse (AX1) und zur Selektordrehachse (AXS ) angeordnet ist,
wobei der BLDC-Motorkörper (40) eine einzige Einheit ist und einen Rotor, einen Stator und ein Motorgehäuse umfasst, wobei das Motorgehäuse zumindest den Rotor und den Stator umschließt ,
der mechanische Getriebeaktuator ferner einen Betriebsmodus und einen Nicht-Betriebsmodus umfasst, dadurch gekennzeichet dass
- im Betriebsmodus die Motorwelle (50) in zwei entgegengesetzte Richtungen dreht, wobei eine zumindest aus der Motorwelle (50), der ersten Getriebebaugruppe (10) und der Selektorgetriebebaugruppe (20) gebildete Unterbaugruppe ein Drehmoment aufweist, das höher ist als ein vordefinierter Betriebswert, wobei der vordefinierte Betriebswert 1 Nm beträgt; und
- im Nicht-Betriebsmodus die Motorwelle (50) in zwei entgegengesetzte Richtungen dreht, wobei die Unterbaugruppe, die mindestens aus der Motorwelle (50), der ersten Getriebebaugruppe (10) und der Selektorgetriebebaugruppe (20) gebildet ist, ein Drehmoment aufweist, das gleich oder kleiner als ein vordefinierter Nicht-Betriebswert ist, wobei der vordefinierte Nicht-Betriebswert 1 Nm beträgt.

2. Mechanischer Getriebeaktuator nach Anspruch 1, wobei er ferner eine Motor-Erfassungsvorrichtung zum Erzeugen eines Erfassungssignals umfasst, das zumindest den Zustand des Rotors anzeigt, wobei der Zustand des Rotors vorzugsweise die Position oder Drehzahl des Rotors relativ zum Stator umfasst.

3. Mechanischer Getriebeaktuator nach Anspruch 1 oder Anspruch 2, wobei er ferner eine Motorsteuereinheit (MCU) umfasst, die so konfiguriert ist, dass sie einen Steuerbefehl zur Steuerung des erzeugten Drehmoments erzeugt.

4. Mechanischer Getriebeaktuator ach Anspruch 3, wobei der Steuerbefehl zumindest auf dem Erfassungssignal basiert.

5. Mechanischer Getriebeaktuator nach einem der Ansprüche 2 bis 4, wobei der BLDC-Motorkörper (40) die Motor-Erfassungsvorrichtung umfasst, wobei das Motorgehäuse die Motor-Erfassungsvorrichtung weiter umschließt.

6. Mechanischer Getriebeaktuator nach einem der Ansprüche 1 bis 5, wobei der BLDC-Motorkörper (40) ferner eine im Motorgehäuse vorgesehene Bohrung (42) umfasst, die dazu ausgelegt ist, ein Verbindungsmittel (30) aufzunehmen, das ein Sensorsignal-Verbindungsmittel (31) und ein Stromversorgungs-Verbindungsmittel (32) umfasst, wobei die Sensorsignal-Verbindungsmittel (31) so konfiguriert ist, dass sie die Motorsensoreinrichtung mit der Motorsteuereinheit (MCU) verbindet, und wobei die Stromversorgungs-Verbindungsmittel (32) so konfiguriert ist, dass sie den BLDC-Motorkörper (40) elektrisch mit einem Motortreiber (33) verbindet, wobei der Motortreiber (33) ebenfalls elektrisch mit der Motorsteuereinheit (MCU) verbunden ist.

7. Mechanischer Getriebeaktuator nach Anspruch 6, wobei er ferner eine Sensorsignal-Verbindungsmittel (31b) und eine Stromversorgungs-Verbindungsmittel (32b) umfasst, wobei die Sensorsignal-Verbindungsmittel (31) so konfiguriert ist, dass sie die Motorsensoreinrichtung mit der Sensorsignal-Verbindungsmittel (31b) verbindet, die wiederum mit der Motorsteuereinheit (MCU) verbunden ist, und die elektrische StromVerbindungsmittel (32) so konfiguriert ist, dass sie den Stator des BLDC-Motorkörpers (40) mit der elektrischen StromVerbindungsmittel (32b) verbindet, die wiederum mit dem Motortreiber (33) verbunden ist.

8. Mechanischer Getriebeaktuator nach einem der vorstehenden Ansprüche, wobei er ferner ein erstes Gehäuseteil (81) und ein zweites Gehäuseteil (82) umfasst, die so ausgelegt sind, dass sie aneinander befestigt werden können, um einen Innenraum zur Aufnahme des BLDC-Motorkörpers (40), der Motorwelle (50), der ersten Getriebebaugruppe (10) und der Selektorgetriebebaugruppe (20) zu bilden.

9. Mechanischer Getriebeaktuator nach einem der vorstehenden Ansprüche, wobei er ferner einen Elektronikträger (PCB) umfasst, der auf einer Ebene XY angeordnet ist, wobei die erste Drehachse (AX1) und die Selektordrehachse (AXS) im Wesentlichen senkrecht zur Ebene XY angeordnet sind und wobei die Motor-Drehachse (MAX) im Wesentlichen parallel zur Ebene XY angeordnet ist.

10. Mechanischer Getriebeaktuator nach Anspruch 9, wobei der Elektronikträger (PCB) eine Vertiefung (I) umfasst, die zur Aufnahme des BLDC-Motorkörpers (40) darin ausgelegt ist.

11. Mechanischer Getriebeaktuator nach einem der Ansprüche 9 bis 10, wobei der Elektronikträger (PCB) eine erste Hauptfläche (PCBa) und eine zweite Hauptfläche (PCBb) aufweist, die einander gegenüberliegen, wobei die zweite Hauptfläche näher an der Motorwelle (50) liegt als die erste Hauptfläche, wobei der mechanische Getriebeaktuator ferner einen oder mehrere Kondensatoren (C) umfasst, die mit der zweiten Hauptfläche (PCBb) des Elektronikträgers gekoppelt sind, und wobei die Selektordrehachse (AXS) zwischen der ersten Drehachse (AX1) und dem einen oder den mehreren Kondensatoren (C) angeordnet ist.

12. Mechanischer Getriebeaktuator nach einem der Ansprüche 9 bis 11, wobei der mechanische Getriebeaktuator ferner einen ersten Sensor (70) umfasst, der mit dem Elektronikträger (PCB) verbunden ist, wobei der erste Sensor (70) so konfiguriert ist, dass er eine Position der Selektorgetriebebaugruppe (20) oder zumindest eines Teils davon erfasst.

13. Mechanischer Getriebeaktuator nach Anspruch 12, wobei der Elektronikträger einen ersten Sensor umfasst, wobei die Selektorgetriebebaugruppe (20) ferner einen Magneten (60) umfasst, der mit dem ersten Sensor (70) verbunden ist, so dass im Betrieb ein Luftspalt (d) zwischen dem Magneten (60) und dem ersten Sensor (70) vorgesehen ist.

14. Mechanischer Getriebeaktuator nach Anspruch 13, wobei die Selektorgetriebebaugruppe (20) ein erstes Ende (21a) und ein zweites Ende (21b) umfasst, wobei das erste Ende (21a) so ausgebildet ist, dass es mit einer Abtriebswelle verbunden werden kann, und das zweite Ende (21b) so ausgebildet ist, dass es den Magneten (60) aufnehmen kann.

15. Verfahren zum Zusammenbau eines mechanischen Getriebeaktuators für ein Fahrzeug, umfassend:
- Bereitstellen eines BLDC-Motorkörpers (40), der so konfiguriert ist, dass er unter Verwendung von an ihn angelegtem elektrischem Strom ein Drehmoment erzeugt, wobei eine Motorwelle (50) durch das erzeugte Drehmoment bewegt wird, und wobei die Motorwelle (50) eine Motordrehachse (MAX) definiert, wobei der BLDC-Motorkörper (40) eine einzelne Einheit ist und einen Rotor, einen Stator und ein Motorgehäuse umfasst, wobei das Motorgehäuse zumindest den Rotor und den Stator umschließt;
- Verbinden einer ersten Getriebebaugruppe (10) mit der Motorwelle (50), wobei die erste Getriebebaugruppe (10) eine erste Drehachse (AX1) definiert;
- Verbinden einer Selektorgetriebebaugruppe (20) mit der ersten Getriebebaugruppe (10), wobei die Selektorgetriebebaugruppe (20) eine Selektordrehachse (AXS) definiert, so dass im Betrieb die Motordrehachse (MAX) im Wesentlichen senkrecht zur ersten Drehachse (AX1) und zur Selektordrehachse (AXS) angeordnet ist;
- in einem Betriebsmodus die Motorwelle (50) in zwei entgegengesetzte Richtungen drehen, wobei eine zumindest aus der Motorwelle (50), der ersten Getriebebaugruppe (10) und der Selektorgetriebebaugruppe (20) gebildete Unterbaugruppe ein Drehmoment aufweist, das höher ist als ein vordefinierter Betriebswert, wobei der vordefinierte Betriebswert 1 Nm beträgt; und
- Drehen der Motorwelle (50) in einem Nicht-Betriebsmodus in zwei entgegengesetzte Richtungen, wobei die Unterbaugruppe, die mindestens aus der Motorwelle (50), der ersten Getriebebaugruppe (10) und der Selektorgetriebebaugruppe (20) gebildet ist, ein Drehmoment aufweist, das gleich oder kleiner als ein vordefinierter Nicht-Betriebswert ist, wobei der vordefinierte Nicht-Betriebswert 1 Nm beträgt.

## Revendications

1. Actionneur de transmission mécanique pour un véhicule, comprenant :
- un corps de moteur BLDC (40) configuré pour produire un couple à l'aide d'un courant électrique qui lui est appliqué ;
- un arbre de moteur (50) entraîné par le couple généré, l'arbre de moteur (50) définissant un axe de rotation du moteur (MAX) ;
- un premier ensemble d'engrenages (10) relié à l'arbre de moteur (50), dans lequel le premier ensemble d'engrenages (10) définit un premier axe de rotation (AX1) ; et
- un ensemble d'engrenages de sélection (20) relié au premier ensemble d'engrenages (10), dans lequel l'ensemble d'engrenages de sélection (20) définit un axe de rotation de sélection (AXS) ;
dans lequel l'axe de rotation du moteur (MAX) est disposé sensiblement perpendiculairement au premier axe de rotation (AX1) et à l'axe de rotation du sélecteur (AXS),
dans lequel le corps de moteur BLDC (40) est une unité unique et comprend un rotor, un stator et un boîtier de moteur, dans lequel le boîtier de moteur renferme au moins le rotor et le stator, l'actionneur de transmission mécanique comprend en outre un mode de fonctionnement et un mode de non-fonctionnement, **caracterisé par**
- en mode de fonctionnement, l'arbre du moteur (50) tourne dans deux directions opposées, dans lequel un sous-ensemble formé au moins par l'arbre du moteur (50), le premier ensemble d'engrenages (10) et l'ensemble d'engrenages de sélection (20) présente un couple supérieur à une valeur de fonctionnement prédéfinie, dans lequel la valeur de fonctionnement prédéfinie est de 1 Nm ; et
- en mode de non-fonctionnement, l'arbre du moteur (50) est configuré pour tourner dans les deux directions opposées, le sous-ensemble formé au moins par l'arbre du moteur (50), le premier ensemble d'engrenages (10) et l'ensemble d'engrenages de sélection (20) présentant un couple égal ou inférieur à une valeur de non-fonctionnement prédéfinie, ladite valeur de non-fonctionnement prédéfinie étant de 1 Nm.

2. Actionneur de transmission mécanique selon la revendication 1, dans lequel il comprend en outre un moyen de détection du moteur destiné à générer un signal de détection indiquant au moins l'état du rotor, préférentiellement, l'état du rotor comprenant la position ou la vitesse du rotor par rapport au stator.

3. Actionneur de transmission mécanique selon la revendication 1 ou la revendication 2, dans lequel il comprend en outre une unité de commande de moteur (MCU) configurée pour générer une instruction de commande destinée à commander le couple produit.

4. Actionneur de transmission mécanique selon la revendication 3, dans lequel l'instruction de commande est basée au moins sur le signal de détection.

5. Actionneur de transmission mécanique selon l'une quelconque des revendications 2 à 4, dans lequel le corps de moteur BLDC (40) comprend le moyen de détection du moteur, le boîtier du moteur renfermant en outre ledit moyen de détection du moteur.

6. Actionneur de transmission mécanique selon l'une quelconque des revendications 1 à 5, dans lequel le corps de moteur BLDC (40) comprend en outre un trou (42) prévu dans le boîtier du moteur, adapté pour recevoir à travers un moyen de connexion (30) qui comprend un moyen de connexion de signal de détection (31) et un moyen de connexion d'alimentation électrique (32), dans lequel le moyen de connexion de signal de détection (31) est configuré pour connecter le moyen de détection du moteur à l'unité de commande du moteur (MCU), et dans lequel le moyen de connexion d'alimentation électrique (32) est configuré pour connecter électriquement le corps de moteur BLDC (40) à un pilote de moteur (33), le pilote de moteur (33) étant également connecté électriquement à l'unité de commande du moteur (MCU).

7. Actionneur de transmission mécanique selon la revendication 6, dans lequel il comprend en outre un moyen de connexion de détection (31b) et un moyen de connexion d'alimentation électrique (32b), dans lequel le moyen de connexion de signal de détection (31) est configuré pour connecter le moyen de détection du moteur au moyen de connexion de détection (31b) qui, à son tour, est connecté à l'unité de commande du moteur (MCU), et le moyen de connexion d'alimentation électrique (32) est configuré pour connecter le stator du corps de moteur BLDC (40) au moyen de connexion d'alimentation électrique (32b) qui, à son tour, est connecté au circuit d'attaque du moteur (33).

8. Actionneur de transmission mécanique selon l'une quelconque des revendications précédentes, dans lequel il comprend en outre une première partie de boîtier (81) et une deuxième partie de boîtier (82) adaptées pour être fixées l'une à l'autre de manière à former un espace intérieur destiné à renfermer le corps de moteur BLDC (40), l'arbre de moteur (50), le premier ensemble d'engrenages (10) et l'ensemble d'engrenages de sélection (20).

9. Actionneur de transmission mécanique selon l'une quelconque des revendications précédentes, dans lequel il comprend en outre un support électronique (PCB) disposé sur un plan XY, dans lequel le premier axe de rotation (AX1) et l'axe de rotation du sélecteur (AXS) sont disposés sensiblement perpendiculairement au plan XY, et dans lequel l'axe de rotation du moteur (MAX) est disposé sensiblement parallèlement au plan XY.

10. Actionneur de transmission mécanique selon la revendication 9, dans lequel le support électronique (PCB) comprend un renfoncement (I) adapté pour y loger le corps de moteur BLDC (40).

11. Actionneur de transmission mécanique selon l'une quelconque des revendications 9 à 10, dans lequel le support électronique (PCB) comprend une première surface principale (PCBa) et une deuxième surface principale (PCBb) opposées l'une à l'autre, la deuxième surface principale étant plus proche de l'arbre du moteur (50) que la première surface principale, dans lequel l'actionneur de transmission mécanique comprend en outre un ou plusieurs condensateurs (C) couplés à la deuxième surface principale (PCBb) du support électronique, et dans lequel l'axe de rotation du sélecteur (AXS) est disposé entre le premier axe de rotation (AX1) et le ou les condensateurs (C).

12. Actionneur de transmission mécanique selon l'une quelconque des revendications 9 à 11, dans lequel l'actionneur de transmission mécanique comprend en outre un premier capteur (70) couplé au support électronique (PCB), le premier capteur (70) étant configuré pour détecter une position de l'ensemble d'engrenage de sélection (20) ou au moins d'une partie de celui-ci afin d'obtenir un signal de sélection.

13. Actionneur de transmission mécanique selon la revendication 12, dans lequel le support électronique comprend un premier capteur (70) dans lequel l'ensemble d'engrenages de sélection (20) comprend en outre un aimant (60) relié au premier capteur (70) de telle sorte que, en utilisation, un entrefer (d) est prévu entre l'aimant (60) et le premier capteur (70).

14. Actionneur de transmission mécanique selon la revendication 13, dans lequel l'ensemble d'engrenage de sélection (20) comprend une première extrémité (21a) et une deuxième extrémité (21b), la première extrémité (21a) étant configurée pour se raccorder à un arbre de sortie, et la deuxième extrémité (21b) étant configurée pour recevoir l'aimant (60).

15. Procédé d'assemblage d'un actionneur de transmission mécanique pour un véhicule, comprenant :
- la fourniture d'un corps de moteur BLDC (40) configuré pour produire un couple généré à l'aide d'un courant électrique qui lui est appliqué, dans lequel un arbre de moteur (50) est déplacé par le couple généré, et dans lequel l'arbre de moteur (50) définit un axe de rotation du moteur (MAX), le corps de moteur BLDC (40) étant une unité unique et comprenant un rotor, un stator et un boîtier de moteur, le boîtier de moteur renfermant au moins le rotor et le stator ;
- raccorder un premier ensemble d'engrenages (10) à l'arbre du moteur (50), dans lequel le premier ensemble d'engrenages (10) définit un premier axe de rotation (AX1) ;
- raccorder un ensemble d'engrenages de sélection (20) au premier ensemble d'engrenages (10), dans lequel l'ensemble d'engrenages de sélection (20) définit un axe de rotation de sélection (AXS) de telle sorte que, en utilisation, l'axe de rotation du moteur (MAX) soit disposé sensiblement perpendiculairement au premier axe de rotation (AX1) et à l'axe de rotation de sélection (AXS) ;
- faire tourner, en mode de fonctionnement, l'arbre du moteur (50) dans deux directions opposées, dans lequel un sous-ensemble formé au moins par l'arbre du moteur (50), le premier ensemble d'engrenages (10) et l'ensemble d'engrenages de sélection (20) présente un couple supérieur à une valeur de fonctionnement prédéfinie, ladite valeur de fonctionnement prédéfinie étant de 1 Nm ; et
- faire tourner, en mode de non-fonctionnement, l'arbre moteur (50) dans deux directions opposées, dans lequel le sous-ensemble formé au moins par l'arbre moteur (50), le premier ensemble d'engrenages (10) et l'ensemble d'engrenages de sélection (20) présente un couple égal ou inférieur à une valeur de non-fonctionnement prédéfinie, ladite valeur de non-fonctionnement prédéfinie étant de 1 Nm.
